# NEUE EUROPÄISCHE PATENTSCHRIFT

(11) **EP 2 447 564 B2**
(45) Veröffentlichungstag und Bekanntmachung des Hinweises auf die Entscheidung über den Einspruch: **20.02.2019**
(45) Hinweis auf die Patenterteilung: 06.04.2016
(21) Anmeldenummer: 11186684.4
(22) Anmeldetag: 26.10.2011
(51) Int. Cl.: F16D 65/18, F16D 65/56, F16D 127/10, F16D 125/28, F16D 125/58

(54) **Selbstverstärkende Scheibenbremse für ein Nutzfahrzeug**
Self-reinforcing disc brake for a commercial vehicle
Frein à disque à auto-amplification pour un véhicule utilitaire

(30) Priorität: 29.10.2010 DE 102010050102
(43) Veröffentlichungstag der Anmeldung: 02.05.2012
(73) Patentinhaber: KNORR-BREMSE Systeme für Nutzfahrzeuge GmbH, 80809 München (DE)
(72) Erfinder: Werth, Alexander, 80999 München (DE); Baumgartner, Johann, 85368 Moosburg (DE); Trimpe, Robert, 82234 Weßling (DE); Klingner, Matthias, 82272 Moorenweis (DE); Pericevic, Aleksandar, 80636 München (DE); Seidenschwang, Matthias, 81249 München (DE); Camilo-Martinez, José, 82008 Unterhaching (DE)
(74) Vertreter: Specht, Peter

(56) Entgegenhaltungen:
- EP-A1- 1 925 841
- EP-A1- 1 939 484
- EP-A2- 1 978 272
- DE-A1-102005 049 760
- DE-A1-102006 029 942
- DE-A1-102008 036 033
- DE-A1-102009 031 759
- DE-B- 1 153 949
- DE-B3-102006 036 278
- DE-T5- 10 392 252
- US-A- 3 047 098

## Beschreibung

Die Erfindung betrifft-eine selbstverstärkende Scheibenbremse für ein Nutzfahrzeug nach dem Oberbegriff des Anspruchs 1.

Selbstverstärkende Scheibenbremsen, wie sie z. B. aus der DE 10 2006 036 278 B3 oder der DE 10 2008 036 033 A1 bekannt sind, nutzen die bei einer Bremsung auf den Bremsbelag wirkenden Umfangskräfte zur Unterstützung der Zuspannkraft, die von einem elektromechanischen Antrieb oder einem pneumatisch betätigten Bremszylinder über eine Zuspanneinrichtung aufgebracht wird. Dadurch kann der Antrieb erheblich kleiner dimensioniert werden.

Diese Selbstverstärkung wird durch eine Selbstverstärkungseinrichtung erreicht, die Bestandteil der Zuspanneinrichtung ist. Dabei sind, bezogen auf die Bremsscheibe, in axialer Richtung bewegliche Druckstempel vorgesehen, die in Korrespondenz mit dem zuspannseitigen, üblicherweise eine einen Reibbelag tragende Belagträgerplatte oder einer Belagdruckplatte aufweisenden Bremsbelag jeweils eine Spreizlagerung bilden, wozu jeder Druckstempel stirnseitig einen Rollkörper, beispielsweise eine Kugel, aufweist, die in einer durch in Umfangsrichtung der Bremsscheibe von innen nach außen ansteigende Rampen gebildeten Senke einliegt.

Bei einer Bremsung, wenn also der Bremsbelag mittels der Zuspanneinrichtung gegen die Bremsscheibe gepresst wird, verstellt sich der Bremsbelag aufgrund der Reibkräfte beim Anpressen an die Bremsscheibe in deren Drehrichtung, wobei sich gleichzeitig die zugeordnete Rampe entlang der Lagerkugel bewegt, unter Verstärkung der auf die Bremsscheibe wirkenden axial ausgerichteten Bremskraft.

Zwar sind die Kugeln der Druckstempel, die im übrigen beidseitig mit Abstand zu einem an den Bremsbelag zentral angreifenden Bremsstempel der Zuspanneinrichtung angeordnet sind, in der Lage, den Bremsbelag in Umfangsrichtung zu stabilisieren, jedoch können sie einem radialen Schrägverschleiß des Bremsbelages nicht entgegenwirken.

Die Abstützung der bei einer Bremsung auftretenden Umfangskraft erfolgt ausschließlich an den Flächen der Rampen, von denen aus die Kraft über die Kugeln und weiter über die Rampen auf die Belagträgerplatte und einen achsfesten Bremsträger abgeleitet wird, an dem sich die Belagträgerplatte abstützt.

Im Vergleich zu konventionellen Scheibenbremsen sind die aus der Abstützung der Umfangskraft am Bremsträger entstehenden Reibkräfte als Ursache für einen Schrägverschleiß nicht vorhanden, da die Abstützung an den Kugeln nahezu reibungsfrei verläuft. Ausschlaggebend für den Schrägverschleiß der Bremsbeläge einer selbstverstärkenden Scheibenbremse hingegen sind in erster Linie die Druckverteilung und ein Geschwindigkeitsprofil an der Reibfläche des Bremsbelages.

In der Konsequenz führt dies zu einem vorzeitigen Verschleiß und damit der Notwendigkeit eines vorzeitigen Bremsbelagwechsels, der naturgemäß einen erheblichen nachteiligen Einfluss auf die Betriebskosten des Nutzfahrzeuges mit sich bringt.

In der DE 11 53 949 B ist eine Scheibenbremse offenbart, mit kreisrunden Bremsbelägen, an die außerhalb ihres jeweiligen geometrischen Mittelpunktes oder Schwerpunktes ein Bremsstempel angreift, um einen ungleichmäßigen Verschleiß der Bremsbeläge zu verhindern.

Der Erfindung liegt die Aufgabe zugrunde, eine selbstverstärkende Scheibenbremse der gattungsgemäßen Art so weiterzuentwickeln, dass ihre Funktionssicherheit dauerhaft verbessert und ihre Standzeit erhöht wird.

Diese Aufgabe wird durch eine Scheibenbremse mit den Merkmalen des Anspruchs 1 gelöst.

Durch diese konstruktive Ausbildung wird eine gleichmäßige Belastung des Bremsbelages über die gesamte Reibfläche und damit ein gleichmäßiger Belagverschleiß erreicht.

Der bei einer Umfangsverschiebung des Bremsbelages eintretende Versatz der Krafteinleitungsposition wird für den Normalbetrieb, also der Abbremsung aus einer Vorwärtsfahrt zumindest teilweise kompensiert, indem die Bremsbelagkontur entgegen der Bremsscheibendrehrichtung verschoben ist.

Erfindungsgemäß ist hierzu der Abstand des Bremsstempels zur einlaufseitigen Kante des Bremsbelages größer als der Abstand zur auslaufseitigen Kante. Hierdurch wird erreicht, dass bei Betätigung der Bremse und einer damit einhergehenden Verschiebung des Bremsbelages mit dem dann eintretenden Versatz der Position der Krafteinleitung der Druckstempel ein Kräftegleichgewicht erzielt wird. Bevorzugt ist der Unterschied des Abstandes zwischen der Bremsscheiben-Einlaufseite und der -Auslaufseite zum Bremsstempel 5 - 15 mm, vorzugsweise etwa 10 mm.

Als ergänzende Maßnahme ist weiterhin vorgesehen, dass der Abstand der Anlagepunkte der Rollkörper an den zur Einlaufseite hin ansteigenden Rampen in Nichtfunktionsstellung der Bremse zum Reibbelag weniger als 25 % größer ist als der geringste Abstand der Senke zum Reibbelag, bevorzugt 10 - 15 %. Damit wird zusätzlich zu den Abstützmomenten eine unsymmetrische Einleitungsposition an beiden Druckstempeln sowie gegebenenfalls am Bremsstempel wirksam.

Wünschenswert ist eine Minimierung des Abstandes zwischen dem Kontaktpunkt der Rollkörper an der jeweiligen Rampe zur Bremsscheibe, da hierdurch ebenfalls ein Schrägverschleiß reduziert wird. Hierzu soll die Spreizlagerung so weit wie möglich in die Belagträgerplatte eingesenkt werden, wobei die Rampeneinsätze so in der Belagträgerplatte positioniert werden, dass sie ohne Festigkeitsverlust der Belagträgerplatte einen minimalen Abstand zur Reibfläche einnehmen.

Gemäß der Erfindung ist vorgeschlagen, dass der Bremsstempel schwenkbar an der Belagträgerplatte oder einer damit verbundenen Druckplatte gelagert ist, wobei der Abstand der Schwenkachse zur Reibfläche des unbenutzten Reibbelages mindestens doppelt so groß ist wie die Reibbelagdicke und der Bremsstempel in Nichtfunktionsstellung in Auslaufrichtung schräg verläuft. Der Anstellwinkel sollte mindestens 1 °, bezogen auf die Drehachse der Bremsscheibe betragen, vorzugsweise 2° - 4°.

Zum einen wird durch die gelenkige Anbindung des Bremsstempels an der Belagträgerplatte eine beim Bremsen auftretende Schrägstellung des Bremsstempels genutzt, um den Krafteinleitungspunkt bei Verschiebung des Brems belages um den gleichen Betrag mitzuverschieben und zusätzlich bei Aufbringen der Betätigungskraft eine Umfangskraft-Komponente in Bremsscheibenrichtung zu erzeugen. Diese Umfangskraft-Komponente ist den an den Rampen wirkenden Umfangskräften entgegengesetzt und kompensiert in entsprechendem Maße deren einen Schrägverschleiß verursachende Wirkung.

Zum anderen wird dieser Effekt verstärkt durch die Schrägstellung des Bremsstempels in Nichtfunktionsstellung der Bremse. Dabei wird der Abstand der drehgelenkigen Anbindung des Bremsstempels von der Reibfläche des Bremsbelages möglichst groß gewählt, um einen möglichst großen Versatz des Kraftangriffs in Bremsscheibendrehrichtung zu erzielen, im Gegensatz zu den Druckpunkten der Rollkörper an den Rampen, die einen möglichst geringen Abstand von der Reibfläche aufweisen sollen.

Nach einem weiteren Gedanken der Erfindung ist vorgesehen, dass bei Anordnung einer Synchronisationseinrichtung, mit der die Druckstempel zum Ausgleich eines Lüftspiels axial verstellbar sind, die Druckstempel über die Synchronisationseinrichtung derart miteinander gekoppelt sind, dass der Abstand zur Bremsscheibe des im Normalbetrieb auslaufseitigen Druckstempels um ein vorbestimmtes Maß geringer ist als der Abstand des der Einlaufseite zugeordneten Druckstempels.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnung beschrieben.

Die einzige Figur zeigt einen Teilausschnitt einer erfindungsgemäßen Scheibenbremse in einer geschnittenen Draufsicht.

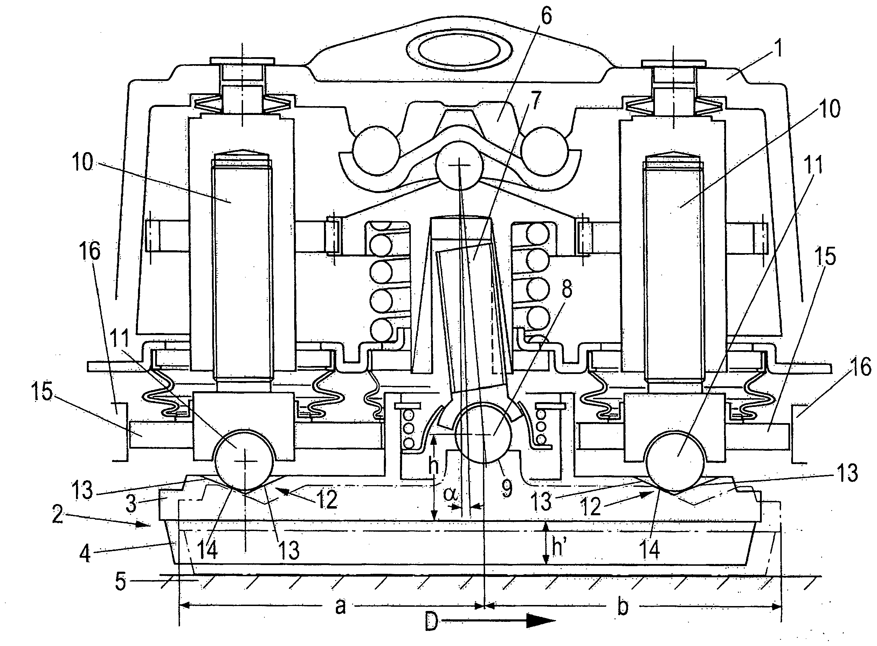

In der Figur 1 ist in einem Teilausschnitt eine selbstverstärkende Scheibenbremse dargestellt, mit einem an einem ortsfesten Bremsträger 16 gehaltenen Bremssattel 1, in dem zwei Bremsbeläge 2, von denen lediglich einer dargestellt ist, angeordnet sind, die in Funktion beidseitig gegen eine Bremsscheibe 5 pressbar sind. Der Bremsbelag 2 besteht aus einer Belagträgerplatte 3 und einem daran befestigten Reibbelag 4.

Zum Zuspannen der Bremsbeläge 2 ist eine Zuspanneinrichtung in Form eines Drehhebels 6 und eines Bremsstempels 7 vorgesehen, über den der zugeordnete zuspannseitige Bremsbelag 2 in axialer Richtung, bezogen auf die Drehachse der Bremsscheibe 5 bewegbar ist.

Weiter ist eine Selbstverstärkungseinrichtung vorgesehen, die Spreizlager 12 aufweist, denen jeweils ein Druckstempel 10 zugeordnet ist, die mit einer Nachstelleinrichtung zur verschleißbedingten Nachstellung der Bremsbeläge 2 in Eingriff stehen.

Die Druckstempel 10 sind mit ihrem dem Bremsbelag 2 zugewandten Endbereich in einer Führungsplatte 15 gehalten, die in dem Bremsträger 16 in Zuspannrichtung verschiebbar ist.

Jede Spreizlagerung 12 weist einen im zugeordneten Druckstempel 10 stirnseitig eingelassenen Rollkörper 11 in Form einer Kugel auf, die andererseits in einer als Kugellaufbahn ausgebildeten Senke einliegt, deren Seitenwände im Sinne von gegensinnig ansteigenden Rampen 13 ausgebildet sind.

Bei einer Bremsung, wenn also mittels des Drehhebels 6 der Bremsbelag 2 gegen die Bremsscheibe 5 gepresst wird, entstehen Umfangskräfte, durch die der Bremsbelag 2 in Drehrichtung der Bremsscheibe 5 verschoben wird, unter Abstandsveränderung des Bremsbelages 2 zum Druckstempel 10. Die bremsende Anlage des Bremsbelages 2 an der Bremsscheibe 5 ist in der Figur strichpunktiert dargestellt, während die Pfeilangabe D die Drehrichtung der Bremsscheibe 5 im Normal- d.h., im Vorwärtsbetrieb eines Nutzfahrzeuges wiedergibt.

Die Druckstempel 10 und damit die Spreizlagerungen 12 sind beidseitig des Bremsstempels 7 angeordnet, der schwenkbar am Bremsbelag 2, konkret an der Belagträgerplatte 3 gelagert ist, wozu die Belagträgerplatte 3 eine kalottenförmige Aufnahme 9 aufweist, in der eine als Schwenklager fungierende Kugel 9 einliegt, an der sich andererseits die angepasste Stirnseite des Bremsstempels 7 abstützt.

Der Abstand h der Schwenkachse zur Reibfläche des unbenutzten Reibbelages 4 ist erfindungsgemäß mindestens doppelt so groß wie die Dicke h' des Reibbelages 4. In Nichtfunktionsstellung des Bremsbelages 2 verläuft der Bremsstempel 7 in Auslaufrichtung der Bremsscheibe 5, also nach rechts gesehen, unter einem Winkel α schräg. Die gezeigte Stellung des Bremsstempels 7 gibt eine Bremsposition wieder, in der der Bremsstempel 7 schräger gestellt ist, d.h., der Winkel α ist in diesem Fall größer.

Der Bremsstempel 7 greift erfindungsgemäß außermittig am Bremsbelag 2 an und zwar derart, dass der Abstand a zur im Normalbetrieb einlaufseitigen Kante der Belagträgerplatte 3 (links) größer ist als der Abstand b zur auslaufseitigen Kante (rechts).

Ebenfalls in Nichtfunktionsstellung des Bremsbelages 2 ist der Abstand von Anlagepunkten 14 der Rollkörper 11 an den zur Einlaufseite (links) hin ansteigenden Rampen 13 zum Reibbelag weniger als 25 % größer als der geringste Abstand der durch die beiden gegensinnig verlaufenden Rampen gebildeten Senke zum Reibbelag 4.

### Bezugszeichenliste

- 1: Bremssattel
- 2: Bremsbelag
- 3: Belagträgerplatte
- 4: Reibbelag
- 5: Bremsscheibe
- 6: Drehhebel
- 7: Bremsstempel
- 8: Kugel
- 9: Aufnahme
- 10: Druckstempel
- 11: Rollkörper
- 12: Spreizlager
- 13: Rampe
- 14: Anlagepunkt
- 15: Führungsplatte
- 16: Bremsträger

## Patentansprüche

1. A Eine selbstverstärkende Scheibenbremse (geeignet) für ein Nutzfahrzeug.
B mit einem eine Bremsscheibe übergreifenden Bremssattel.
C beidseitig an die Bremsscheibe anpressbaren, jeweils aus einer Belagträgerplatte und einem Reibbelag bestehenden Bremsbelägen.
D von denen ein zuspannseitiger über einen in einer Aufnahme gehaltenen, an einer Zuspanneinrichtung anliegenden Bremsstempel betätigbar ist.
E zwei parallel ausgerichteten und beidseitig abständig zum Bremsstempel angeordneten Druckstempeln.
F die sich jeweils über einen Rollkörper an einer, zur Selbstverstärkung in Umfangsrichtung gegensinnig ansteigende Rampen aufweisenden Spreizlagerung abstützen,
G wobei der Rollkörper in Nichtfunktionsstellung der Scheibenbremse in einer zwischen den Rampen gebildeten Senke einliegt, **dadurch gekennzeichnet, dass**
H der Bremsstempel schwenkbar an der Belagträgerplatte gelagert ist.
I wobei der Abstand der Schwenkachse zur Reibfläche des unbenutzten Reibbelages mindestens doppelt so groß ist wie die Reibbelagdicke
J und der Bremsstempel in Nichtfunktionsstellung der Scheibenbremse in Blickrichtung auf die Bremsscheibe in Auslaufrichtung schräg verläuft, wobei
K die Schwenkachse (8), mit der der Bremsstempel (7) am Bremsbelag (2) gehalten ist, als Kugel ausgebildet ist und wobei
L die Schwenkachse (8) in der kalottenförmigen Aufnahme (9) der Belagträgerplatte (3) einliegt.

2. Scheibenbremse nach Anspruch 1, **dadurch gekennzeichnet, dass** der Bremsstempel (7) unter einem Winkel (α) von mindestens 1°, vorzugsweise 2° - 4° zur Drehachse der Bremsscheibe (5) verläuft.

3. Scheibenbremse nach Anspruch 1 oder 2, **dadurch gekennzeichnet, dass** der der Abstand (a) des Bremsstempels (7) zur im Normalbetrieb einlaufenden Kante des Bremsbelages (2) größer ist als der Abstand (b) zur auslaufseitigen Kante.

4. Scheibenbremse nach einem der vorhergehenden Ansprüche, **dadurch gekennzeichnet, dass** der Abstand der Anlagepunkte (14) der Rollkörper (11) an den zur Einlaufseite hin ansteigenden Rampen (13) in Nichtfunktionsstellung der Scheibenbremse zum Reibbelag weniger als 25 % größer ist als der geringste Abstand der Senke zum Reibbelag (4).

5. Scheibenbremse nach einem der vorhergehenden Ansprüche, **dadurch gekennzeichnet, dass** der Abstand der Anlagepunkte (14) zum Reibbelag (4) 10 -15 % größer ist als der geringste Abstand der Senke zum Reibbelag (4).

6. Scheibenbremse nach einem der vorhergehenden Ansprüche, bei der in die Druckstempel (10) eine Synchronisationseinrichtung angeschlossen ist, zum Ausgleich eines Lüftspiels, **dadurch gekennzeichnet, dass** der Abstand des auslaufseitigen Druckstempels (10) zur Bremsscheibe (5) geringer ist als der Abstand des einlaufseitigen Druckstempels (10) zur Bremsscheibe (5).

7. Scheibenbremse nach einem der vorhergehenden Ansprüche, **dadurch gekennzeichnet, dass** der Abstand (a) 5-15 mm, vorzugsweise etwa 10 mm größer ist als der Abstand (b).

## Claims

1. A Disc brake of the self-energising type for a commercial vehicle,
B comprising a brake calliper overlapping a brake disc
C brake linings capable of being pressed against said brake disc on both sides, whereof each is constituted by a lining backing plate and a friction lining,
D with said brake linings serving to operate a braking die on the brake application side, which is held in a receiving part and bears against a brake application device,
E as well as two pressure dies oriented in parallel and disposed at a spacing from said braking die on both sides,
F whereof each being supported via a rolling body at an expanding bearing provided with ramps rising in opposite directions along the circumferential extension for the self-energising function,
G wherein, with an inoperative position of the disc brake, said rolling body is inserted into a recess formed between said ramps, **characterised in**
H **that** said braking die is supported for pivoting motion on said lining backing plate
I with the distance from the pivoting axis relative to the friction surface of the unused friction lining corresponding at least to the double thickness of the friction lining and
J with the inoperative position of the disc brake, said braking die extends along the trailing direction, seen along the axis of view on said brake disc,
K wherein said pivoting axis serving to hold said braking die on said brake lining is configured in the form of a sphere and
L wherein said pivoting axis is inserted into said dome-shaped receiving part of said lining backing plate.

2. Disc brake according to Claim 1, **characterised in that** said braking die (7) extends at an angle (α) of at least 1°, preferably of 2° to 4°, relative to the axis of rotation of said brake disc (5).

3. Disc brake according to Claim 1 or 2, **characterised in that** the distance (a) of said braking die (7) relative to the leading edge of said brake lining (2) in normal operation is greater than the distance (b) relative to the edge on the exit side.

4. Disc brake according to any of the preceding Claims, **characterised in that** with an inoperative position of the disc brake, the distance of the supporting points (14) of said rolling bodies (11) on said ramps (13) rising towards the entry side, relative to said friction lining is greater by at least 25 % than the smallest distance of said recess relative to said friction lining (4).

5. Disc brake according to any of the preceding Claims, **characterised in that** the distance of the supporting points (14) relative to said friction lining (4) is greater by 10 to 15 % than the smallest distance of said recess relative to said friction lining (4).

6. Disc brake according to any of the preceding Claims, wherein a synchronising means is connected in said pressure dies (10) for compensation of a clearance, **characterised in that** the distance of said compression die (10) on the exit side relative to said brake disc (5) is smaller than the distance of said compression die (10) on the entering side relative to said brake disc (5).

7. Disc brake according to any of the preceding Claims, **characterised in that** the distance (a) is greater than the distance (b) by 5 to 15 mm, preferably by 10 mm approximately.

## Revendications

1. A Frein à disque à auto-amplification pour un véhicule utilitaire, comprenant
B un étrier de frein, qui chevauche un disque de frein,
C des garnitures de frein aptes à être pressé audit disque de frein des deux côtés, dont chacun est composé d'une plaque d'appui de la garniture et d'une garniture de friction,
D auxdites garnitures de frein servant à actionner un tampon de freinage du côté de serrage, qui est tenu dans une partie réceptrice et porte contre un dispositif de serrage,
E ainsi que deux poinçons de compression orientés en parallèle et disposés à un écart dudit tampon de freinage des deux côtés,
F dont chacun s'appuie via un corps rotatif à un palier d'expansion muni des rampes qui montent en sens contraires le long de la direction circonférentielle pour l'auto-amplification,
G dans lequel, en une position hors fonction du frein à disque, ledit corps rotatif est inséré dans une dépression formée entre lesdites rampes, **caractérisé en ce**
H **que** ledit tampon de freinage est logé, de manière pivotable, à ladite plaque d'appui de la garniture,
I à l'écart de l'axe de pivotement par rapport à la surface de friction de la garniture de friction inutilisée correspondant au moins au doubler de l'épaisseur de la garniture de friction, et,
J en position hors fonction du frein à disque, ledit tampon de freinage s'étend obliquement le long de la direction de sortie, dans la direction de regard sur ledit disque de frein
K ledit axe de pivotement, moyennant duquel ledit tampon de freinage est tenu à ladite garniture de frein, est configuré sous forme d'une sphère et
L ledit axe de pivotement est inséré dans ladite partie réceptrice en forme d'hémisphère de ladite plaque d'appui de la garniture.

2. Frein à disque selon la revendication 1, **caractérisé en ce que** ledit tampon de freinage (7) s'étend à un angle (α) d'au moins 1°, de préférence de 2° à 4°, par rapport à l'axe de révolution dudit disque de frein (5).

3. Frein à disque selon la revendication 1 ou 2, **caractérisé en ce que** l'écart (a) dudit tampon de freinage (7) par rapport au bord d'entrée de ladite garniture de frein (2) en service normal est plus grand que l'écart (b) par rapport au bord du côté de sortie.

4. Frein à disque selon une quelconque des revendications précédentes, **caractérisé en ce qu'**en une position hors fonction du frein à disque, l'écart des points d'appui (14) desdits corps rotatifs (11) auxdites rampes (13), qui montent vers le coté d'entrée, par rapport à ladite garniture de friction est plus grand par moins de 25 % que l'écart le plus petit de ladite dépression par rapport à ladite garniture de friction (4).

5. Frein à disque selon une quelconque des revendications précédentes, **caractérisé en ce que** l'écart des points d'appui (14) par rapport à ladite garniture de friction (4) est plus grand par 10 à 15 % que l'écart le plus petit de ladite dépression par rapport à ladite garniture de friction (4).

6. Frein à disque selon une quelconque des revendications précédentes, dans lequel un moyen de synchronisation est raccordé dans lesdits poinçons de compression (10) pour la compensation d'un jeu, **caractérisé en ce que** l'écart dudit poinçon de compression (10) du côté de sortie par rapport audit disque de frein (5) est plus petit que l'écart dudit poinçon de compression (10) du côté d'entrée par rapport audit disque de frein (5).

7. Frein à disque selon une quelconque des revendications précédentes, **caractérisé en ce que** l'écart (a) est plus grand que l'écart (b) par 5 à 15 mm, de préférence par 10 mm environ.
